# EUROPÄISCHE PATENTANMELDUNG

(11) **EP 1 857 813 A2**
(43) Veröffentlichungstag der Anmeldung: **21.11.2007**
(21) Anmeldenummer: 07108054.3
(22) Anmeldetag: 11.05.2007
(51) Int. Cl.: G01N 25/72

(54) **Verfahren zum beurteilen von Körpern**

(30) Priorität: 16.05.2006 DE 102006023144
(71) Anmelder: Ibea Ingenieurbüro für Elektronik und Automation GmbH, 22525 Hamburg (DE)
(72) Erfinder: EL JARAD, Akram, 26122, Oldenburg (DE)
(74) Vertreter: Michalski, Stefan

(57) **Zusammenfassung**

Die Vorliegende Erfindung bezieht sich auf ein Verfahren zum Beurteilen eines Körpers mit niedriger Wärmeleitung unter Erfassung eines Temperaturfeldes des Körpers, wobei der Körper über seine Oberfläche energetisch beeinflusst wird, gleichzeitig oder anschließend das Temperaturfeldes des energetisch beeinflussten Körpers erfasst und in Abhängigkeit von dem erfassten Temperaturfeldes bewertet wird, wobei die Beeinflussung bei niedriger Energie erfolgt.

## Beschreibung

Die vorliegende Erfindung bezieht sich auf das Gebiet der Verfahren zum Beurteilen von Körpern, insbesondere von Ultraschall-Thermographie zur Risserkennung.

Derartige Verfahren sind z.B. aus der DE 196 23 159 C2 bekannt. In diesem Dokument wird ein Verfahren zur Beurteilung eines Körpers offenbart, wobei der Körper in einer Behandlungsstation über seine Oberfläche energetisch beeinflusst wird, gleichzeitig oder anschließend das Temperaturfeldes des energetisch beeinflussten Körpers erfasst und in Abhängigkeit des Temperaturfeldes in einer Bewertungsstation bewertet wird.

Das Verfahren lt. der DE 196 23 159 C2 wird vor allem für das Bewerten und Beurteilen von metallischen Körpern, wie z.B. Blechen eingesetzt. Jedoch hat sich in der Praxis gezeigt, dass es wünschenswert wäre, ein derartiges Verfahren auch für Körper mit niedrigerer Wärmeleitung einsetzen zu können. Dies war in der Praxis jedoch bisher nicht möglich, da die Prüfzeiten bei Anwendungen nach dem Stand der Technik, insbesondere der DE 196 23 159 C2 meist zu lang sind. Ein verbessertes Verfahren würde jedoch z.B. eine Automatisierung mit niedrigeren Taktzeiten ermöglichen.

Es ist daher eine Aufgabe der vorliegenden Erfindung, ein Verfahren zum Beurteilen von Körpern mit niedrigerer Wärmeleitung, insbesondere mit Körpern mit einer Wärmeleitung von ≤5 W /mK bereitzustellen.

Diese Aufgabe wird durch Anspruch 1 der vorliegenden Erfindung gelöst. Demgemäß wird ein Verfahren zum Beurteilen eines Körpers mit einer Wärmeleitung von ≤5 W /mK , insbesondere einer Oberfläche und/oder oberflächennaher Bereiche desselben, unter Erfassung eines Temperaturfeldes des Körpers bereitgestellt, wobei der Körper über seine Oberfläche energetisch beeinflusst wird, gleichzeitig oder anschließend das Temperaturfeldes des energetisch beeinflussten Körpers erfasst und in Abhängigkeit von dem erfassten Temperaturfeldes bewertet wird, dadurch gekennzeichnet, dass die bei der energetischen Beeinflussung die zugeführte Energie ≤500 Ws beträgt.

Es hat sich überraschenderweise gezeigt, dass bei einer solch energetisch niedrigen Beeinflussung innerhalb einer weiten Spanne der Anwendungen der Erfindung eine akkurate und effiziente Beurteilung möglich ist. Insbesondere kann so der Körper auf Risse und/oder Sprünge untersucht werden. Weiterhin wird innerhalb einer weiten Spanne der Anwendungen der Erfindung durch ein erfindungsgemäßes Verfahren mindestens einer der folgen Vorteile erreicht:
- Durch die geringe Energie, die dem Körper zugeführt wird, wird dieser nicht oder nur unwesentlich von dem Beurteilungsverfahren beeinflusst, insbesondere nicht erwärmt oder verformt
- Durch das erfindungsgemäße Verfahren wird der Körper nur geringfügig erwärmt. Es ist dabei festgestellt worden, dass die Erwärmung im wesentlichen nur im Bereich der Einkoppelstelle und am Riss stattfindet. Eine evtl. Schädigung des Körpers findet nur im Bereich des Risses statt, da nur fehlerhafte Stellen angeregt werden. Eine Verformung des Körpers konnte in der Praxis nicht oder nur unwesentlich festgestellt werden.
- Aufgrund der niedrigen Energieleistung, die dem Körper zugeführt wird, ist eine Implementierung des Verfahrens mit einfachen und unkomplizierten Verfahrensaufbauten möglich
- Da der Körper nur wenig beeinflusst wird, kann dieser unmittelbar nach dem Verfahren weiteren Verfahrensschritten (z.B. in einer Produktion) zugeführt werden, ohne dass ein Abkühlen etc. notwendig wäre.
- Durch das erfindungsgemäße Verfahren wird innerhalb einer weiten Spanne der Anwendungen der Erfindung eine automatisierte Qualitätskontrolle von Werkstoffen mit einem niedrigen Wärmeleitfähigkeitskoeffizienten ermöglicht. Hierbei kann bei einzelnen Anwendungen eine Taktrate von mindestens 300 Stück pro Minute, z.T. sogar 400 oder 500 Stück erreicht werden.
- Durch das erfindungsgemäße Verfahren genügt innerhalb einer weiten Spanne der Anwendungen und gemäß einer bevorzugten Ausführungsform der der Erfindung zur Erfassung des Temperaturfeldes eine einfache Kamera, wie z.B. eine Bolometerkamera, insbesondere eine Bolometerkamera mit einer geringen Auflösung, wie z.B. 160 x 120 Pixel und 50 Hz Bildfolgerate. Es wird angenommen (ohne darauf beschränkt zu sein), dass dies zum einen daher resultiert, dass sich die Wärme aufgrund der geringen Wärmeleitfähigkeit des Prüfkörpers nur sehr langsam verteilt. Zudem spielt eine Rolle, dass obwohl die verwendete Energie kleiner als ≤500 Ws beträgt, innerhalb einer weiten Spanne der Anwendungen der Erfindung die erzeugten Temperaturunterschiede im Körper so groß sind, dass keine hohe Empfindlichkeit der Kamera notwendig ist.

Die vorliegende Erfindung bezieht sich insbesondere auf ein Verfahren zum Beurteilen von Körpern mit einer Wärmeleitung von ≤3 W /mK, ebenso insbesondere auf ein Verfahren zum Beurteilen von Körpern mit einer Wärmeleitung von ≤1 W /mK.

Gemäß einer bevorzugten Ausführungsform der Erfindung beträgt die bei der energetischen Beeinflussung zugeführte Energie ≤300 Ws. Dadurch kann innerhalb einer weiten Spanne der Anwendungen der Erfindung eine noch schonendere Untersuchung erreicht werden.

Gemäß einer bevorzugten Ausführungsform der Erfindung beträgt die bei der energetischen Beeinflussung zugeführte Energie ≤100 Ws.

Gemäß einer bevorzugten Ausführungsform der Erfindung wird der Körper für eine Zeit von >0 ms und ≤500 ms energetisch beeinflusst. Dadurch kann innerhalb einer weiten Spanne der Anwendungen der Erfindung das Verfahren noch effizienter, insbesondere zeiteffizienter gestaltet werden, ohne dass die Qualität des Verfahrens negativ beeinflusst wird.

Gemäß einer bevorzugten Ausführungsform der Erfindung wird der Körper für eine Zeit von ≥ 50 ms und ≤ 300 ms energetisch beeinflusst. Es hat sich herausgestellt, dass innerhalb einer weiten Spanne der Anwendungen der Erfindung diese Zeit ausreicht, um eine genügend genaue Beurteilung durchführen zu können.

Gemäß einer bevorzugten Ausführungsform der Erfindung wird der Körper für eine Zeit von > 100 ms und ≤200 ms energetisch beeinflusst.

Gemäß einer bevorzugten Ausführungsform der Erfindung wird der Körper mit einer Energiequelle mit einer Leistung von > 200 W und ≤5000 W energetisch beeinflusst. Dadurch kann innerhalb einer weiten Spanne der Anwendungen der Erfindung das Verfahren noch schonender gestaltet werden, ohne dass die Qualität des Verfahrens negativ beeinflusst wird; ebenfalls kann dadurch innerhalb einer weiten Spanne der Anwendungen der Erfindung auf unanspruchsvolle und konventionelle Energiequellen wie z.B. ein Ultraschall-Handschweissgerät zurückgegriffen werden.

Gemäß einer bevorzugten Ausführungsform der Erfindung wird der Körper mit einer Energiequelle mit einer Leistung von ≥ 500 W und ≤2500 W energetisch beeinflusst. Es hat sich herausgestellt, dass innerhalb einer weiten Spanne der Anwendungen der Erfindung eine Energiequelle mit dieser Leistung ausreicht, um eine genügend genaue Beurteilung durchführen zu können.

Gemäß einer bevorzugten Ausführungsform der Erfindung wird mit einer Energiequelle mit einer Leistung von ≥ 750 W und ≤ 1500 W energetisch beeinflusst.

Gemäß einer bevorzugten Ausführungsform der Erfindung erfolgt die energetische Beeinflussung durch Ultraschalleinkopplung und/oder mittels Ultraschall, bevorzugt im Bereich von ≥ 10 kHz und ≤100 kHz, noch bevorzugt ≥ 20 kHz und ≤35 kHz. Dies hat sich in der Praxis für eine breite Spanne von Anwendungen innerhalb der vorgesehenen Erfindung als vorteilhaft herausgestellt.

Gemäß einer bevorzugten Ausführungsform der Erfindung wird bei der Messung des Temperaturfeldes nur ein Teil des Körpers erfasst und die energetische Beeinflussung an einer Stelle des Körpers erfolgt, welcher nicht von der Messung des Temperaturfeldes erfasst wird. Dies erlaubt innerhalb einer weiten Spanne der Anwendungen der Erfindung eine beeinflussungsfreiere Messung des Temperaturfeldes; zudem wird der Körper weniger durch die Messung in Anspruch genommen.

Gemäß einer bevorzugten Ausführungsform der Erfindung umfasst der Körper eine Ober- und Unterseite, wobei bei der Messung des Temperaturfeldes die Oberseite des Körpers erfasst wird und die energetische Beeinflussung an der Unterseite des Körpers erfolgt.

Gemäß einer bevorzugten Ausführungsform der Erfindung umfasst der Körper eine Obersowie eine Unterseite und mindestens eine sonstige Seite, wobei bei der Messung des Temperaturfeldes die Oberseite des Körpers erfasst wird und die energetische Beeinflussung an der Unterseite bzw. einer der sonstigen Seiten des Körpers erfolgt.

Die Erfindung bezieht sich außerdem auf eine Vorrichtung zur Durchführung des erfindungsgemäßen Verfahrens.

Bevorzugt beinhaltet die Vorrichtung ein Ultraschallgerät für die energetische Beeinflussung des Körpers, durch welche bevorzugt eine Ultraschallkopplung im Bereich von ≥ 10 kHz und ≤100 kHz, bevorzugt ≥ 20 kHz und ≤35 kHz erzeugt wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele des erfindungsgemäßen Verfahrens dargestellt sind. In den Zeichnungen zeigt:
- Fig. 1: eine sehr schematische Darstellung einer Vorrichtung zur Durchführung des Verfahrens gemäß einer ersten Ausführungsform der Erfindung; sowie
- Fig. 2: ein Temperaturbild eines Körpers, der gemäß einer zweiten Ausführungsform der Erfindung beeinflusst wurde.

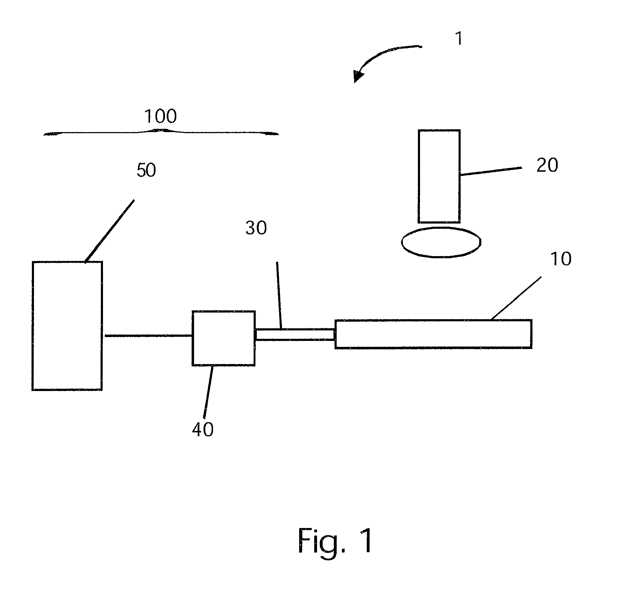

Fig. 1 zeigt eine sehr schematische Darstellung einer Vorrichtung 1 zur Durchführung des Verfahrens gemäß einer ersten Ausführungsform der Erfindung.

Die Vorrichtung umfasst ferner ein Ultraschallgerät 100, welches einen Ultraschallgenerator 50, der einen Konverter 40 mit Sonotrode 30 treibt, umfasst. Mittels der Sonotrode 30 kann der zu untersuchende Körper 10 energetisch beeinflusst werden und sodann mittels der Kamera 20, welche bevorzugt eine IR-Kamera ist ein Temperaturbild aufgenommen werden. Bevorzugt arbeitet dabei der Konverter mit einer Ultraschallfrequenz von 20-35 kHz.

Es sei kurz darauf hingewiesen, dass - wie oben beschrieben - es insbesondere bevorzugt ist, wenn die energetische Beeinflussung des Körpers 10 durch die Sonotrode 30 an einer Seite des Körpers erfolgt, die nicht von der Kamera 20 erfasst wird. Dies hat sich in vielen Anwendungen als vorteilhaft herausgestellt, da so sowohl die Qualität des Temperaturbildes maximiert wie auch die Beanspruchung des Körpers 10 vermindert werden kann.

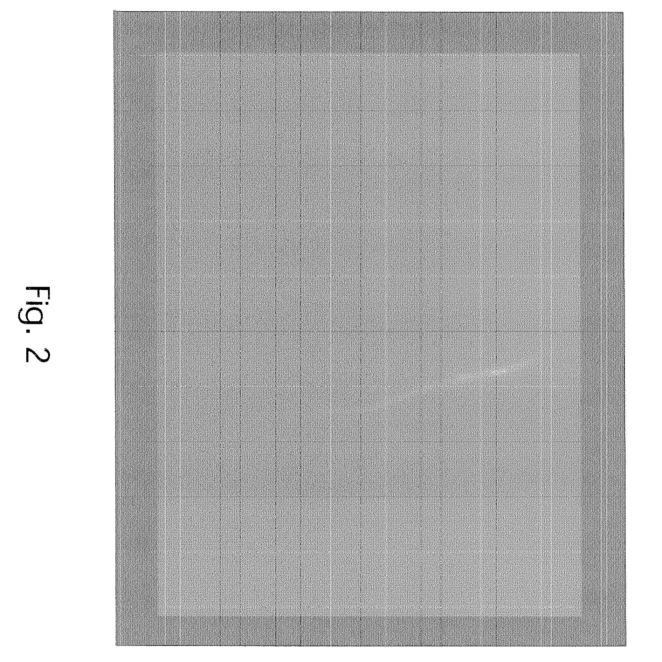

Fig. 2 zeigt ein Temperaturbild eines Körpers, der gemäß einer zweiten Ausführungsform der Erfindung beeinflusst wurde. Dabei handelt es sich um einen Dachziegel, der von der Seite für 200ms mit 1000 W Ultraschall beeinflusst wurde. Im Temperaturbild ist deutlich der Riss im Dachziegel als hellerer Fleck zu sehen.

## Patentansprüche

1. Verfahren zum Beurteilen eines Körpers mit einer Wärmeleitung von ≤5 W /mK, insbesondere einer Oberfläche und/oder oberflächennaher Bereiche desselben, unter Erfassung eines Temperaturfeldes des Körpers, wobei der Körper über seine Oberfläche energetisch beeinflusst wird, gleichzeitig oder anschließend das Temperaturfeldes des energetisch beeinflussten Körpers erfasst und in Abhängigkeit von dem erfassten Temperaturfeldes bewertet wird,
**dadurch gekennzeichnet, dass**
die bei der energetischen Beeinflussung zugeführte Energie ≤500 Ws beträgt.

2. Verfahren nach Anspruch 1, wobei der Körper für eine Zeit von >0 ms und ≤500 ms energetisch beeinflusst wird.

3. Verfahren nach Anspruch 1 oder 2, wobei der Körper für eine Zeit von ≥ 50 ms und ≤300 ms energetisch beeinflusst wird.

4. Verfahren nach einem der Ansprüche 1 bis 3, wobei der Körper mit einer Energiequelle mit einer Leistung von ≥ 200 W und ≤5000 W energetisch beeinflusst wird.

5. Verfahren nach einem der Ansprüche 1 bis 4, wobei bei der Messung des Temperaturfeldes nur einen Teil des Körpers erfasst wird und die energetische Beeinflussung an einer Stelle des Körpers erfolgt, welcher nicht von der Messung des Temperaturfeldes erfasst wird.

6. Verfahren nach Anspruch 5 wobei der Körper eine Ober- und Unterseite umfasst, wobei bei der Messung des Temperaturfeldes die Oberseite des Körpers erfasst wird und die energetische Beeinflussung an der Unterseite des Körpers erfolgt.

7. Verfahren nach Anspruch 5, wobei der Körper eine Ober- sowie eine Unterseite und mindestens eine sonstige Seite umfasst, wobei bei der Messung des Temperaturfeldes die Oberseite des Körpers erfasst wird und die energetische Beeinflussung an der Unterseite bzw. einer der sonstigen Seiten des Körpers erfolgt.

8. Verfahren nach einem der Ansprüche 1 bis 7, wobei die energetische Beeinflussung durch Ultraschalleinkopplung und/oder mittels Ultraschall, bevorzugt im Bereich von > 10 kHz und ≤100 kHz, noch bevorzugt ≥ 20 kHz und ≤35 kHz erfolgt.

9. Vorrichtung zur Durchführung des Verfahrens nach einem der Ansprüche 1 bis 8

10. Vorrichtung nach Anspruch 9, wobei die Vorrichtung ein Ultraschallgerät umfasst.
